(19) **Europäisches Patentamt / European Patent Office / Office européen des brevets**

(11) **EP 4 640 394 A1**

(12) **EUROPEAN PATENT APPLICATION**
published in accordance with Art. 153(4) EPC

(43) Date of publication:
**29.10.2025 Bulletin 2025/44**

(21) Application number: **23906463.7**

(22) Date of filing: **26.10.2023**

(51) International Patent Classification (IPC):
**B29B 17/02** (2006.01)

(52) Cooperative Patent Classification (CPC):
**B29B 17/02**

(86) International application number:
**PCT/JP2023/038666**

(87) International publication number:
**WO 2024/135089 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2022 JP 2022203575**

(71) Applicant: **Toyobo Co., Ltd.**
**Kita-ku**
**Osaka-shi, Osaka 530-0001 (JP)**

(72) Inventors:
- **MATSUMURA, Mei**
  **Otsu-shi, Shiga 520-0292 (JP)**
- **INAGAKI, Jun**
  **Otsu-shi, Shiga 520-0292 (JP)**
- **ITO, Katsuya**
  **Osaka-shi, Osaka 530-0001 (JP)**
- **YAHATA, Tamotsu**
  **Hita-shi, Oita 877-0071 (JP)**
- **YOKOYAMA, Junichi**
  **Hita-shi, Oita 877-0071 (JP)**

(74) Representative: **Vossius & Partner**
**Patentanwälte Rechtsanwälte mbB**
**Siebertstrasse 3**
**81675 München (DE)**

(54) **RECYCLING METHOD FOR AIRBAG FABRICS**

(57)    An object of the present invention is to provide a novel recycling method for an airbag fabric comprising a polyamide resin, the recycling method not requiring the use of an alkaline aqueous solution for removing a silicone resin. The recycling method for an airbag fabric, the method comprising: a heat treatment step of bringing an airbag fabric comprising a polyamide resin, at least one surface of the airbag fabric being coated with a silicone resin, into contact with $H_2O$ at a temperature of 160°C or higher and at a pressure equal to or more than a saturated water vapor pressure; and a recovery step of recovering a polyamide resin from which the silicone resin has been removed.

**EP 4 640 394 A1**

# EP 4 640 394 A1

**Description**

TECHNICAL FIELD

The present invention relates to a recycling method for an airbag fabric.

BACKGROUND ART

In recent years, attention has been focused on recycling waste materials and the like from the viewpoint of environmental load reduction.

An airbag fabric typically has a polyamide fabric as a base fabric, the surface of which is coated with a silicone resin for the purposes of improving heat resistance, airtightness, flame retardancy, and the like. Therefore, when recycling the airbag fabric (particularly a polyamide resin that constitutes the base fabric), it is necessary to remove the silicone resin from the polyamide base fabric.

One known method for recycling airbag fabrics is to treat an airbag fabric with an alkaline aqueous solution to remove a silicone resin from a base fabric. Specifically, a method is known in which an airbag fabric is immersed in an alkaline aqueous solution containing a tertiary amine and a surfactant, followed by stirring and allowing to stand, to remove a silicone resin (Patent Document 1).

RELATED ART DOCUMENT

PATENT DOCUMENT

Patent Document 1: Japanese Unexamined Patent Application

PROBLEMS TO BE SOLVED BY THE INVENTION

However, when the airbag fabric is treated with the alkaline aqueous solution, the treatment solution is absorbed into the polyamide base fabric and the silicone resin layer, and thus a step of removing the treatment solution is required to recycle these fabric and layer, which makes the operation complicated. In addition, since the polyamide resin that constitutes the base fabric may be damaged such as decomposing by the treatment with the alkaline aqueous solution, this method does not provide sufficiently high recyclability. Furthermore, since the treatment with the alkaline aqueous solution uses chemicals such as sodium hydroxide, this method requires complicated aftertreatment such as disposal of waste fluids, and there is concern about the environmental load.

The present invention has been made in view of the above circumstances, and an object of the present invention is to provide a novel recycling method for an airbag fabric made of (comprising) a polyamide resin, the recycling method not requiring use of an alkaline aqueous solution for removing a silicone resin.

SOLUTIONS TO THE PROBLEMS

The inventors made intensive studies to solve the above problems, and as a result, have found that an airbag fabric can be recycled without using an alkaline aqueous solution by a method including a heat treatment step of bringing an airbag fabric comprising a polyamide resin, at least one surface of the airbag fabric being coated with a silicone resin, into contact with $H_2O$ at a temperature of 160°C or higher and at a pressure equal to or more than a saturated water vapor pressure, and a recovery step of recovering a polyamide resin from which the silicone resin has been removed. The present invention has been completed based on this finding.

The essence of the present invention is as follows.

[1] A recycling method for an airbag fabric, the method comprising:

a heat treatment step of bringing an airbag fabric comprising a polyamide resin, at least one surface of the airbag fabric being coated with a silicone resin, into contact with $H_2O$ at a temperature of 160°C or higher and at a pressure equal to or more than a saturated water vapor pressure: and
a recovery step of recovering a polyamide resin from which the silicone resin has been removed.

[2] The recycling method for an airbag fabric according to [1], wherein, in the heat treatment step, the treatment temperature is 170°C or higher and 230°C or lower, and the treatment pressure is 0.9 MPa or more and 3.0 MPa or less.

[3] The recycling method for an airbag fabric according to [1] or [2], wherein, in the heat treatment step, the treatment temperature is 170°C or higher and 210°C or lower, and the treatment pressure is 0.9 MPa or more and 1.9 MPa or less.

[4] The recycling method for an airbag fabric according to any one of [1] to [3], wherein, in the recovery step, the polyamide resin from which the silicone resin has been removed is peeled off and recovered by applying an external force.

[5] A recycled polyamide resin composition comprising, in at least part of raw materials, the polyamide resin recovered by the recycling method according to any one of [1] to [4].

[6] An airbag base fabric comprising, in at least part of raw materials, the polyamide resin recovered by the recycling method according to any one of [1] to [4].

EFFECTS OF THE INVENTION

The present invention makes it possible to provide a novel recycling method for an airbag fabric comprising a polyamide resin, the recycling method not requiring use of an alkaline aqueous solution for removing a silicone resin. In the recycling method of the present invention, the alkaline aqueous solution is not used or the amount of the alkaline aqueous solution used can be reduced, so that damage to the polyamide resin caused by the alkaline treatment can be suppressed. Furthermore, the polyamide resin from which the silicone resin has been removed can be easily recovered by using a process with reduced environmental load.

MODE FOR CARRYING OUT THE INVENTION

The recycling method for an airbag fabric of the present invention includes a heat treatment step of bringing an airbag fabric comprising a polyamide resin, at least one surface of the airbag fabric being coated with a silicone resin, into contact with $H_2O$ at a temperature of 160°C or higher and at a pressure equal to or more than a saturated water vapor pressure, and a recovery step of recovering a polyamide resin from which the silicone resin has been removed.

[Heat Treatment Step]

In this step, the airbag fabric comprising a polyamide resin is brought into contact with $H_2O$ at a temperature of 160°C or higher and at a pressure equal to or more than a saturated water vapor pressure, thereby bringing the polyamide resin to a state of easily separating from the silicone resin. In this step, the polyamide resin may be separated in part or in whole from the silicone resin.

From the viewpoint of efficiency of the heat treatment, when the size of the airbag fabric comprising a polyamide resin to be subjected to the heat treatment exceeds 10,000 cm$^2$, it is preferable to cut it in advance using a known cutting machine or the like to a size of 10,000 cm$^2$ or less, preferably 2,500 cm$^2$ or less. The lower limit of the size of the airbag fabric to be subjected to the heat treatment is not particularly restricted, and is, for example, preferably 0.01 cm$^2$ or more, and more preferably 0.1 cm$^2$ or more. The shape of each piece of the airbag fabric obtained by cutting is not particularly restricted, and may be a quadrilateral shape such as rectangular and square, a circular shape, an elliptical shape, or other polygonal shapes, or may be an irregular shape, and is preferably a quadrilateral shape from the viewpoint of ease of handling. When the piece has a quadrilateral shape, the length of one side thereof is preferably within the range of 0.1 to 100 cm, and more preferably within the range of 0.2 to 50 cm.

The treatment temperature in the heat treatment is 160°C or higher, preferably 165°C or higher, more preferably 170°C or higher, and further preferably 175°C or higher, and is preferably 240°C or lower, more preferably 230°C or lower, further preferably 220°C or lower, and still more preferably 210°C or lower. That is, the treatment temperature in the heat treatment is preferably 165 to 240°C, more preferably 170 to 230°C, further preferably 170 to 220°C, still more preferably 170 to 210°C, and even more preferably 175 to 210°C. When the treatment temperature is within the above-mentioned range, the polyamide resin can be brought to a state of easily separating from the silicone resin while deterioration such as decomposition of the polyamide resin is suppressed.

The treatment pressure in the heat treatment is a pressure equal to or more than a saturated water vapor pressure at the treatment temperature, preferably 0.6 to 3.3 MPa, more preferably 0.7 MPa or more, further preferably 0.8 MPa or more, and still more preferably 0.9 MPa or more, and is more preferably 3.0 MPa or less, further preferably 2.8 MPa or less, still more preferably 2.3 MPa or less, and even more preferably 1.9 MPa or less. That is, the treatment pressure in the heat treatment is more preferably 0.7 to 3.0 MPa, further preferably 0.8 to 3.0 MPa, still more preferably 0.9 to 3.0 MPa, still further preferably 0.9 to 2.8 MPa, even more preferably 0.9 to 2.3 MPa, and even further preferably 0.9 to 1.9 MPa. When the treatment pressure is within the above-mentioned range, the polyamide resin can be brought to a state of easily separating from the silicone resin while deterioration such as decomposition of the polyamide resin is suppressed.

The state of $H_2O$ to be brought into contact with the airbag fabric may be gas (i.e., water vapor) or liquid (i.e.,

water). Specifically, when the heat treatment is performed at a pressure equal to a saturated water vapor pressure at the treatment temperature, the state of $H_2O$ is saturated water vapor, and when the heat treatment is performed at a pressure more than a saturated water vapor pressure at the treatment temperature, the state of $H_2O$ is subcritical water (also called hot compressed water or high-pressure hot water).

From the viewpoint of ease of controlling a temperature and a pressure in the heat treatment, it is preferable to perform the treatment at a saturated water vapor pressure at the treatment temperature.

Examples of methods for performing the heat treatment include a method in which high-pressure steam is supplied from a boiler or the like to a pressure-resistant reaction vessel containing a sample, and a method in which a sample and water are placed in a pressure-resistant reaction vessel and heated using a heater or the like.

Since the airbag fabric is treated with high-temperature and high-pressure $H_2O$ in the recycling method of the present invention, the polyamide resin can be brought to a state of easily separating from the silicone resin while deterioration such as decomposition of the polyamide resin is suppressed. Even if the airbag fabric is treated at a temperature of 160°C or higher in the air, the polyamide resin cannot be brought to a state of easily separating from the silicone resin.

The treatment time in the heat treatment may be appropriately set depending on the treatment temperature and the treatment pressure, and is, for example, preferably 1 to 360 minutes, more preferably 3 minutes or more, further preferably 5 minutes or more, still more preferably 10 minutes or more, and is more preferably 240 minutes or less, further preferably 180 minutes or less, and still more preferably 120 minutes or less. That is, the treatment time in the heat treatment is more preferably 3 to 240 minutes, further preferably 5 to 180 minutes, and still more preferably 10 to 120 minutes. When the treatment time is within the above-mentioned range, the polyamide resin can be brought to a state of easily separating from the silicone resin while deterioration such as decomposition of the polyamide resin is suppressed.

In order to prevent deterioration of the airbag fabric (particularly, polyamide resin), it is preferable that a rise in temperature and/or a rise in pressure to the treatment temperature and/or treatment pressure be performed for a short time. For example, it is preferable that a rise in pressure from 0.05 MPa to the treatment pressure be performed within 60 minutes, and more preferably within 30 minutes. It is preferable that a rise in temperature from 80°C to the treatment temperature be performed within 60 minutes, and more preferably within 30 minutes. After the heat treatment, the reaction vessel and/or the airbag fabric may be cooled naturally or by using a known cooling device.

The heat treatment may be performed with stirring using a known stirring device such as a stirring blade, if necessary. When the heat treatment is performed with stirring, the rotation speed of the stirring is preferably 10 to 3,000 rpm, and more preferably 20 to 2,000 rpm. The polyamide resin can be brought to a state of more easily separating from the silicone resin by the heat treatment with stirring. Furthermore, by performing the heat treatment with stirring to generate friction between the fabrics, the polyamide resin that has been brought to a state of more easily separating by the heat treatment may be separated in part or in whole from the silicone resin.

The heat treatment may be performed while holding (fixing) the shape of at least one end of the airbag fabric, if necessary. From the viewpoint of the efficiency of the heat treatment, it is preferable to hold at least one end of the airbag fabric, because this can prevent the airbag fabric from being folded or curled up and suppress a state in which the surface coated with the silicone resin does not appear on the exterior. As a method for fixing at least one end of the airbag fabric, for example, an end shape holding member or frame made of metal may be provided at the end of the airbag fabric. From the viewpoint of shape holding, it is preferable that the end shape holding member is provided, over a total length corresponding to 50% or more of the entire length of the end of the airbag fabric, more preferably over a total length of 70% or more, and further preferably over a total length of 90% or more. It is still more preferable that the frame is provided over the entire length of the end.

The airbag fabric after the heat treatment may be subjected to aftertreatment such as dehydration and drying. The dehydration and drying treatment may be performed using a known dehydrator and/or dryer. For example, it is preferable to perform drying at 40 to 80°C for 1 to 60 minutes using a dryer such as an infrared heater, an oven, or a hot air dryer.

[Recovery Step]

In this step, the polyamide resin that has been brought to a state of easily separating from the silicone resin by the heat treatment is separated and recovered, and/or the polyamide resin separated from the silicone resin in the heat treatment step is recovered.

As the method for recovering the polyamide resin, for example, a method in which the polyamide resin is separated and recovered by applying an external force, such as peeling off the polyamide resin from the silicone resin by hand, can be given. When at least part of the polyamide resin is separated from the silicone resin in the heat treatment step, the polyamide resin separated from the silicone resin can be visually discerned and recovered.

When peeling off the polyamide resin by hand, an external force such as kneading or rubbing may be further applied to the airbag fabric after the heat treatment, and then the polyamide resin may be peeled off. However, it is preferable that the polyamide resin can be peeled off by hand and without further applying an external force such as kneading or rubbing from the viewpoint of ease of separation of the polyamide resin.

Furthermore, in the airbag fabric after the heat treatment, the polyamide resin is in a state of easily separating from the silicone resin, and thus if an external force such as a friction force or a shearing force is applied by stirring, crushing, or the like, the polyamide resin easily separates. For this reason, the airbag fabric after the heat treatment may be stirred and/or crushed to separate the polyamide resin from the silicone resin, and then the polyamide resin from which the silicone resin has been removed may be visually discerned and recovered.

When pulverizing a sample after the heat treatment to separate the polyamide resin, it is preferable that the sample be pulverized, using a known crusher or shredder, into small pieces having an area of, for example, 1 cm$^2$ or less, and more preferably 0.5 cm$^2$ or less. The lower limit thereof is not particularly restricted and may be 0.001 cm$^2$ or more.

The recovered polyamide resin may be appropriately subjected to aftertreatment such as washing with a washing liquid such as water or an organic solvent, or drying.

Preferably, the polyamide resin recovered in the recycling method of the present invention (hereinafter, also referred to as recycled polyamide resin) does not substantially contain a silicone resin. "Not substantially contain" means that the content of the silicone resin in the recycled polyamide resin is 1% by mass or less, more preferably 0.5% by mass or less, and further preferably 0.1% by mass or less. The lower limit is not particularly restricted, is preferably 0% by mass, and may be 0.01% by mass or more. That is, the content of the silicone resin in the recycled polyamide resin is preferably 0 to 1% by mass, more preferably 0 to 0.5% by mass, and further preferably 0 to 0.1% by mass. The recycled polyamide resin that does not substantially contain the silicone resin has high recyclability. The content (remaining amount) of the silicone resin contained in the recycled polyamide resin can be obtained, for example, by determining the mass and the like of the silicone resin in the recycled polyamide resin using a Fourier transform infrared spectrophotometer (FT-IR) and calculating from the determined values. Furthermore, when the recycled polyamide resin is analyzed using the above analytical equipment, and a peak unique to the silicone resin is not detected, the recycled polyamide resin may be determined to be completely ridden of the silicone resin.

The higher the recovery rate of the polyamide resin, the more preferable it is. The upper limit thereof is 100% by weight, preferably 5% by weight or more, more preferably 10% by weight or more, and further preferably 15% by weight or more. That is, the recovery rate of the polyamide resin is preferably 5 to 100% by weight, more preferably 10 to 100% by weight, and further preferably 15 to 100% by weight.

The recovery rate of the polyamide resin can be calculated from the weight (B parts by weight) of the recovered polyamide resin, the weight (A parts by weight) of the sample (airbag fabric) before treatment, and the weight ratio (C%) of the polyamide resin in the sample before treatment according to the following formula.

$$\text{Recovery rate (\%)} = \{B / [A \times (C/100)]\} \times 100$$

In the recycling method for an airbag fabric of the present invention, since the polyamide resin from which the silicone resin has been removed is obtained by contact with $H_2O$ at high-temperature and high-pressure, there is no need to perform an alkali treatment, and deterioration of the polyamide resin and the silicone resin due to the alkali treatment can be avoided. In addition, since complicated operations such as removal of an alkaline aqueous solution and disposal of waste fluids are unnecessary, the airbag fabric can be easily recycled.

Furthermore, it is preferable that the polyamide resin recovered by the recycling method for an airbag fabric of the present invention have less change in physical properties such as molecular weight as compared with the polyamide resin in the base fabric before the treatment. If the change in the physical properties of the polyamide resin is suppressed, the polyamide resin can be reused without being subjected to further treatment such as polymerization, and thus has high recyclability. The use of the recovered polyamide resin is not particularly restricted, and, for example, the recovered polyamide resin can be reused by a method of decomposing it into monomers and repolymerizing them (chemical recycling). However, from the viewpoint of energy costs, it is preferable to reuse the material by a method such as re-pelletizing through melting without decomposing it into monomers (material recycling).

The degree of deterioration of the polyamide resin can be checked by a relative viscosity of the polyamide resin. Since the relative viscosity is proportional to a molecular weight of a resin, it can be said that the more the relative viscosity, the greater the molecular weight of the recovered polyamide resin, that is, the recovered polyamide resin maintains a polymer-state. Specifically, the polyamide resin having a relative viscosity of 1.3 or more (preferably 1.5 or more, more preferably 1.7 or more, further preferably 1.9 or more, still more preferably 2.1 or more, and even more preferably 2.3 or more) can be suitably used for material recycling. The relative viscosity (RV) of the polyamide resin can be determined by dissolving 0.25 g of the polyamide resin in 46 g of 96% sulfuric acid, placing 10 ml of the resulting solution in an Oswald viscometer to measure at 20°C, and calculating according to the following formula.

$$RV = T/T0$$

(RV: Relative viscosity, T: Dropping time of the sample solution, T0: Dropping time of the solvent)

When the relative viscosity (RV0) of the polyamide resin before the heat treatment can be measured, it is preferable that the ratio (RV/RV0) of RV (relative viscosity of the recovered polyamide resin) to RV0 be 0.4 or more (preferably 0.5 or more, more preferably 0.6 or more, further preferably 0.7 or more, and still more preferably 0.8 or more). When the value of RV/RV0 is within the above-mentioned range, the polyamide resin obtained by the recovery method of the present invention has reduced deterioration and can be suitably used for material recycling.

[Airbag Fabric Comprising Polyamide Resin]

An airbag fabric to be used in the recycling method of the present invention is an airbag fabric comprising a polyamide resin in which at least one surface of a base fabric made of the polyamide resin is coated with a silicone resin. As the airbag fabric comprising a polyamide resin, scraps generated during the manufacture of airbags and waste materials such as used airbags can be used.

The polyamide resin constituting the base fabric is a polymer having an amide bond in the main chain. Examples of the polyamide resin include polycaproamide (nylon 6), polyhexamethylene adipamide (nylon 66), polytetramethylene adipamide (nylon 46), polyhexamethylene sebacamide (nylon 610), polyhexamethylene dodecamide (nylon 612), polylauryl lactam (nylon 12), polyundecanamide (nylon 11), and copolymers or mixtures thereof. As the airbag fabric, polycaproamide resin obtained by polycondensation of ε-caprolactam, commonly called nylon 6, and nylon 66 are preferably used in terms of heat resistance and cost. Even in the case of recycling, nylon 6 and nylon 66 are preferred in terms of versatility.

The base fabric is preferably a woven fabric composed of multifilament polyamide fibers. Examples of the woven fabric include plain weaves, twill weaves, satin weaves, and modified weaves of these weaves.

The number of filaments in a multifilament yarn constituting the woven fabric (base fabric) is, for example, preferably 30 to 200, and more preferably 40 to 180, in order to obtain a recycled polyamide resin with higher recyclability. The number of filaments can be determined by counting them from a crosssectional photograph of the multifilament yarn.

The total fineness of the multifilament yarn constituting the woven fabric (base fabric) is, for example, preferably 200 to 1000 dtex, and more preferably 250 to 800 dtex, in order to obtain a recycled polyamide resin with higher recyclability. The total fineness of the multifilament yarn can be measured in accordance with JIS L1013 (2010) 8.3.1.

The tensile strength of the multifilament yarn constituting the woven fabric (base fabric) is, for example, preferably 6.0 to 10 cN/dtex, and more preferably 6.5 to 9.5 cN/dtex, in order to obtain a recycled polyamide resin with higher recyclability. The tensile strength of the multifilament yarn can be measured in accordance with JIS L1013 (2010) 8.5.1.

The woven fabric (base fabric) has a weaving density of, for example, preferably 35 to 80 threads/2.54 cm, and more preferably 40 to 75 threads/2.54 cm, in both the warp and weft directions, in order to obtain a recycled polyamide resin with higher recyclability. The weaving density can be measured in accordance with JIS L1096 (2010) 8.6.1.

The woven fabric (base fabric) has a cover factor (CF) of, for example, preferably 1,500 to 2,500, and more preferably 1,700 to 2,300, in order to obtain a recycled polyamide resin with higher recyclability. The cover factor is an index of the coverage of a woven fabric and can be calculated according to the following formula.

$$CF = \sqrt{(\text{total fineness of warp})} \times \text{warp density} + \sqrt{(\text{total fineness of weft})} \times \text{weft density}$$

The base fabric may contain an additive other than the polyamide resin. Examples of the additive include an antioxidant, a heat stabilizer, a smoothening agent, an antistatic agent, a thickener, a flame retardant, a weather resistance agent, a coloring inhibitor, and a colorant.

In the airbag fabric comprising a polyamide resin, at least one surface of the base fabric is coated with a coating resin containing a silicone resin to form a silicone resin layer.

As specific examples of the silicone resin, although not particularly restricted, addition-polymerizable silicone rubbers can be given. Examples thereof include dimethylsilicone rubber, methylvinylsilicone rubber, methylphenylsilicone rubber, trimethylsilicone rubber, fluorosilicone rubber, methylsilicone resin, methylphenylsilicone resin, methylvinylsilicone resin, epoxy-modified silicone resin, acrylic-modified silicone resin, and polyestermodified silicone resin. Among these, an addition-polymerizable methylvinylsilicone rubber is preferable.

The viscosity of the coating resin is preferably from 5,000 to 40,000 mPa·sec, and more preferably from 7,000 to 38,000 mPa·sec. The coating resin may be solvent-based or solvent-free as long as the viscosity falls within the above-mentioned range, but a solvent-free coating resin is preferable. In this specification, the viscosity of a resin composition containing an additive other than the resin, that is, the viscosity of the resin actually applied to the base fabric, is defined as "viscosity of a resin".

The coating resin may contain an additive other than the silicone resin and the solvent. Examples of the additive include reactive curing agents such as platinum-based catalysts (specifically, platinum black, chloroplatinic acid, an alcohol-modified product of chloroplatinic acid, a complex of chloroplatinic acid with olefin, aldehyde, vinyl siloxane, or acetylene alcohol, etc.); adhesive aids such as amino-based silane coupling agents, epoxy-modified silane coupling agents, vinyl-based silane coupling agents, chloro-based silane coupling agents, and mercapto-based silane coupling agents; reinforcing inorganic fillers such as fumed silica and dry silica; a crosslinkable silicone having the terminal groups adjusted (silicone resin); non-reinforcing inorganic fillers such as calcium carbonate, calcium silicate, and titanium dioxide; an antioxidant; an antistatic agent; a flame retardant; a weather resistance agent; a coloring inhibitor, and a colorant.

When a platinum-based catalyst is contained as a reactive curing agent, the content thereof is preferably 100 to 2000 ppm, and more preferably 150 to 1800 ppm, in terms of the amount of platinum metal, with respect to 100 parts by mass of the silicone resin.

When a silane coupling agent is contained as an adhesive aid, the content thereof is preferably 0.01 to 3 parts by mass, and more preferably 0.02 to 2 parts by mass, with respect to 100 parts by mass of the silicone resin.

When an inorganic filler is contained, the content thereof is preferably 0.1 to 200 parts by mass, and more preferably 0.1 to 100 parts by mass, with respect to 100 parts by mass of the silicone resin.

The application of the coating resin (i.e., silicone resin) to the base fabric may be performed by any conventional known coating method. Examples of the coating method include knife coating, roll coating, reverse coating, gravure coating, gravure reverse coating, and kiss coating. The silicone resin is preferably applied by knife coating.

The amount of the silicone resin applied to the airbag fabric comprising a polyamide resin is preferably 5 to 150 $g/m^2$, more preferably 7 $g/m^2$ or more, and further preferably 10 $g/m^2$ or more, and is more preferably 120 $g/m^2$ or less, further preferably 100 $g/m^2$ or less, and still more preferably 70 $g/m^2$ or less, from the viewpoint of ease of separation of the polyamide resin. That is, the amount of the silicone resin applied to the airbag fabric comprising a polyamide resin is more preferably 7 to 120 $g/m^2$, further preferably 10 to 100 $g/m^2$, and still more preferably 10 to 70 $g/m^2$.

From the polyamide resin recovered by the recycling method of the present invention, recycled products containing the polyamide resin recovered in at least part of raw materials can be formed by chemical recycling or material recycling. Examples of the recycled products include recycled polyamide resin compositions and airbag base fabrics.

The present application claims priority to Japanese Patent Application No. 2022-203575, filed on December 20, 2022. The entire disclosure of Japanese Patent Application No. 2022-203575, filed on December 20, 2022, is incorporated herein by reference.

EXAMPLES

Hereinafter, the present invention will be described in more detail with reference to Examples. However, of course, the present invention is not limited to the following Examples, and various modifications that may be made within the scope and spirit described hereinbefore and hereinafter are also encompassed within the technical scope of the present invention.

In the following Examples and Comparative Examples, the following airbag fabric 1 comprising a polyamide resin (hereinafter, may be referred to as polyamide resin airbag fabric 1) was used.

[Polyamide Resin Airbag Fabric 1]

A polyamide 66 multifilament yarn containing 68 filaments having an original yarn strength of 8.4 cN/dtex and a total fineness of 470 dtex was used to form a plain-woven fabric having a warp density of 46 yarns/2.54 cm, a weft density of 46 yarns/2.54 cm, and a cover factor of 1,994. A solvent-free addition-polymerizable vinyl methyl silicone resin having a resin viscosity of 14,000 mPa·sec was applied to one surface of this woven fabric (base fabric) and dried at 200°C for 1 minute, thereby obtaining a polyamide resin airbag fabric 1 having a resin coating amount of 25 $g/m^2$. The weight ratio of the polyamide resin in the polyamide resin airbag fabric 1 was 87%.

In the following Examples and Comparative Examples, the ease of separation of a polyamide resin from the polyamide resin airbag fabric was confirmed by the following procedure. The recovered polyamide resin was evaluated by the following procedure.

[Peeling Test]

The polyamide resin airbag fabric after the heat treatment was dried, and then, the polyamide resin was peeled off by hand. The ease of separation by applying an external force was evaluated according to the following evaluation criteria.

Excellent: The polyamide resin can be peeled off from the edge without applying any further external force such as friction.

Good: The polyamide resin can be peeled off when applying a further external force such as rubbing or scrubbing.

Poor: The polyamide resin cannot be peeled off even when applying a further external force such as rubbing or scrubbing.

[Relative Viscosity]

0.25 g of the recovered polyamide resin was dissolved in 46 g of 96% sulfuric acid, and 10 ml of the resulting solution was placed in an Oswald viscometer to measure at 20°C. The relative viscosity was calculated from the following formula. Since a relative viscosity is proportional to a molecular weight of a resin, it can be said that the more the relative viscosity, the greater the molecular weight of the recovered polyamide resin, that is, the recovered polyamide resin maintains a polymer-state.

$$RV = T/T0$$

(RV: Relative viscosity, T: Dropping time of the sample solution, T0: Dropping time of the solvent)

[Recovery Rate]

The weight (B parts by weight) of the recovered polyamide resin was measured, and the weight (A parts by weight) of the sample before treatment and the weight ratio (C%) of the polyamide resin in the sample before treatment were used to calculate a recovery rate according to the following formula.

$$\text{Recovery rate (\%)} = \{B / [A \times (C/100)]\} \times 100$$

[Example 1]

The polyamide resin airbag fabric 1 was cut into a 50 cm square. The cut sample was placed in a high-pressure reactor, steam was added to the reactor to adjust the pressure to 1.6 MPa and the temperature to 200°C, and a pressure treatment (heat treatment) was performed for 30 minutes with stirring. The sample after the treatment was evaluated for ease of separation. The evaluation result of the peeling test was "Excellent", and the polyamide resin from which the silicone resin had been removed was able to be recovered.

[Example 2]

The treatment was performed in the same manner as in Example 1, except that the heat treatment was performed at 1.0 MPa and 180°C for 60 minutes. The sample after the treatment was evaluated for ease of separation. The evaluation result of the peeling test was "Good", and the polyamide resin from which the silicone resin had been removed was able to be recovered.

[Example 3]

The treatment was performed in the same manner as in Example 1, except that the heat treatment was performed at 1.7 MPa and 250°C for 60 minutes. The sample after the treatment was evaluated for ease of separation. The evaluation result of the peeling test was "Excellent", and the polyamide resin from which the silicone resin had been removed was able to be recovered.

[Example 4]

The treatment was performed in the same manner as in Example 1, except that the heat treatment was performed at 1.3 MPa and 190°C for 60 minutes. The sample after the treatment was evaluated for ease of separation. The evaluation result of the peeling test was "Excellent", and the polyamide resin from which the silicone resin had been removed was able to be recovered.

[Example 5]

The polyamide resin airbag fabric 1 was cut into a 15 cm square, and a metal frame was provided on the periphery of the cut sample using aluminum foil to hold the overall shape of the end of the sample. The sample provided with the metal frame and water were placed in a high-pressure reactor, and heat treatment was performed at 210°C and 2.0 MPa for 10 minutes. The sample after the treatment was evaluated for ease of separation. The evaluation result of the peeling test was "Excellent", and the polyamide resin from which the silicone resin had been removed was able to be recovered. The recovery rate of the polyamide resin was 72%, and the recovered polyamide resin had a relative viscosity of 2.40.

[Example 6]

The treatment was performed in the same manner as in Example 5, except that the heat treatment was performed at 210°C and 2.0 MPa for 5 minutes. The sample after the treatment was evaluated for ease of separation. The evaluation result of the peeling test was "Excellent", and the polyamide resin from which the silicone resin had been removed was able to be recovered. The recovery rate of the polyamide resin was 43%, and the recovered polyamide resin had a relative viscosity of 2.47.

[Example 7]

The treatment was performed in the same manner as in Example 5, except that the heat treatment was performed at 220°C and 2.2 MPa for 5 minutes. The sample after the treatment was evaluated for ease of separation. The evaluation result of the peeling test was "Excellent", and the polyamide resin from which the silicone resin had been removed was able to be recovered. The recovery rate of the polyamide resin was 95%, and the recovered polyamide resin had a relative viscosity of 2.29.

[Example 8]

The treatment was performed in the same manner as in Example 5, except that the heat treatment was performed at 200°C and 1.6 MPa for 30 minutes. The sample after the treatment was evaluated for ease of separation. The evaluation result of the peeling test was "Excellent", and the polyamide resin from which the silicone resin had been removed was able to be recovered. The recovery rate of the polyamide resin was 85%, and the recovered polyamide resin had a relative viscosity of 2.38.

[Example 9]

The treatment was performed in the same manner as in Example 5, except that the heat treatment was performed at 200°C and 1.6 MPa for 5 minutes. The sample after the treatment was evaluated for ease of separation. The evaluation result of the peeling test was "Excellent", and the polyamide resin from which the silicone resin had been removed was able to be recovered. The recovery rate of the polyamide resin was 18%, and the recovered polyamide resin had a relative viscosity of 2.65.

[Comparative Example 1]

The treatment was performed in the same manner as in Example 1, except that the heat treatment was performed at 0.48 MPa and 150°C for 30 minutes. The sample after the treatment was evaluated for ease of separation. The evaluation result of the peeling test was "Poor", and the polyamide resin from which the silicone resin had been removed was not able to be recovered.

[Comparative Example 2]

The treatment was performed in the same manner as in Example 1, except that the heat treatment was performed at 0.48 MPa and 150°C for 60 minutes. The sample after the treatment was evaluated for ease of separation. The evaluation result of the peeling test was "Poor", and the polyamide resin from which the silicone resin had been removed was not able to be recovered.

[Comparative Example 3]

The polyamide resin airbag fabric 1 was cut into a 10 cm square. The cut sample was hung on a metal frame, placed in a hot air oven, and subjected to dry heat treatment at 180°C for 60 minutes without the application of pressure. The sample after the treatment was evaluated for ease of separation. The evaluation result of the peeling test was "Poor", and the polyamide resin from which the silicone resin had been removed was not able to be recovered.

[Comparative Example 4]

The treatment was performed in the same manner as in Comparative Example 3, except that the dry heat treatment was performed at 210°C for 60 minutes. The sample after the treatment was evaluated for ease of separation. The evaluation result of the peeling test was "Poor", and the polyamide resin from which the silicone resin had been removed was not able to be recovered.

**Claims**

1. A recycling method for an airbag fabric, the method comprising:

   a heat treatment step of bringing an airbag fabric comprising a polyamide resin, at least one surface of the airbag fabric being coated with a silicone resin, into contact with $H_2O$ at a temperature of 160°C or higher and at a pressure equal to or more than a saturated water vapor pressure: and
   a recovery step of recovering a polyamide resin from which the silicone resin has been removed.

2. The recycling method for an airbag fabric according to claim 1, wherein, in the heat treatment step, the treatment temperature is 170°C or higher and 230°C or lower, and the treatment pressure is 0.9 MPa or more and 3.0 MPa or less.

3. The recycling method for an airbag fabric according to claim 1, wherein, in the heat treatment step, the treatment temperature is 170°C or higher and 210°C or lower, and the treatment pressure is 0.9 MPa or more and 1.9 MPa or less.

4. The recycling method for an airbag fabric according to claim 1, wherein, in the recovery step, the polyamide resin from which the silicone resin has been removed is peeled off and recovered by applying an external force.

5. A recycled polyamide resin composition comprising, in at least part of raw materials, the polyamide resin recovered by the recycling method according to any one of claims 1 to 4.

6. An airbag base fabric comprising, in at least part of raw materials, the polyamide resin recovered by the recycling method according to any one of claims 1 to 4.

## INTERNATIONAL SEARCH REPORT

| International application No. |
| --- |
| **PCT/JP2023/038666** |

| A. | CLASSIFICATION OF SUBJECT MATTER |
| --- | --- |

**B29B 17/02**(2006.01)i
FI:   B29B17/02 ZAB

According to International Patent Classification (IPC) or to both national classification and IPC

| B. | FIELDS SEARCHED |
| --- | --- |

Minimum documentation searched (classification system followed by classification symbols)

B29B17/00-17/04; C08J11/00-11/28; B09B3/00-5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-73182 A (TOYOTA TSUSHO CORP.) 17 May 2022 (2022-05-17) claims, paragraphs [0012], [0016], [0022]-[0026], examples 2, 3 | 5-6 |
| A | | 1-4 |
| X | JP 2022-73181 A (TOYOTA TSUSHO CORP.) 17 May 2022 (2022-05-17) claims, paragraphs [0017], [0031]-[0035], examples 3-7 | 5-6 |
| A | | 1-4 |
| X | JP 2018-172618 A (DONAU TRADING CO., LTD.) 08 November 2018 (2018-11-08) claims, paragraphs [0011], [0018]-[0051], examples 1-3 | 5-6 |
| A | | 1-4 |
| P, X | JP 2023-623 A (TOHOKU UNIVERSITY) 04 January 2023 (2023-01-04) claims, paragraphs [0005], [0009]-[0011], [0013], [0019]-[0035] | 1-6 |
| A | JP 8-92411 A (MITSUBISHI CHEMICAL CORP.) 09 April 1996 (1996-04-09) entire text | 1-6 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 November 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2023/038666** |

### C. DOCUMENTS CONSIDERED TO BE RELEVANT

| Category* | Citation of document, with indication, where appropriate, of the relevant passages | Relevant to claim No. |
| --- | --- | --- |
| A | JP 5-228936 A (MITSUBISHI CHEMICAL CORP.) 07 September 1993 (1993-09-07)<br>entire text | 1-6 |

Form PCT/ISA/210 (second sheet) (January 2015)

**INTERNATIONAL SEARCH REPORT**
Information on patent family members

International application No.

**PCT/JP2023/038666**

| Patent document cited in search report | | | Publication date (day/month/year) | Patent family member(s) | | | Publication date (day/month/year) |
|---|---|---|---|---|---|---|---|
| JP | 2022-73182 | A | 17 May 2022 | WO | 2022/092196 | A1 | |
| | | | | TW | 202224901 | A | |
| JP | 2022-73181 | A | 17 May 2022 | WO | 2022/092195 | A1 | |
| | | | | TW | 202225518 | A | |
| JP | 2018-172618 | A | 08 November 2018 | (Family: none) | | | |
| JP | 2023-623 | A | 04 January 2023 | WO | 2022/265113 | A1 | |
| JP | 8-92411 | A | 09 April 1996 | (Family: none) | | | |
| JP | 5-228936 | A | 07 September 1993 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022203575 A